# EUROPÄISCHE PATENTSCHRIFT

(11) **EP 3 047 155 B1**
(45) Veröffentlichungstag und Bekanntmachung des Hinweises auf die Patenterteilung: **29.07.2020**
(21) Anmeldenummer: 14781056.8
(22) Anmeldetag: 05.09.2014
(51) Int. Cl.: F15B 13/02

(54) **VENTILVORRICHTUNG UND HYDRAULIKSYSTEM**
VALVE DEVICE AND HYDRAULIC SYSTEM
DISPOSITIF DE CLAPET ET SYSTÈME HYDRAULIQUE

(30) Priorität: 21.09.2013 DE 102013015774
(43) Veröffentlichungstag der Anmeldung: 27.07.2016
(73) Patentinhaber: BIERI HYDRAULIK AG, CH-3097 Liebefeld (CH); Hydac Engineering AG, 6312 Steinhausen (CH)
(72) Erfinder: SCHNEIDER, Wolfgang, CH-3600 Thun (CH); REICHERT, Maxim, 6300 Zug (CH)
(74) Vertreter: Bartels und Partner, Patentanwälte
(86) Internationale Anmeldenummer: PCT/EP2014/002417
(87) Internationale Veröffentlichungsnummer: WO 2015/039734

(56) Entgegenhaltungen:
- DE-A1- 19 633 539
- "Abschaltventile ASE und ASG Cutoff Valves ASE and ASG", , 1. März 2007 (2007-03-01), XP055161580, Gefunden im Internet: URL:http://www.hydrower.de/PDF/abschaltven tile.pdf [gefunden am 2015-01-13]

## Beschreibung

Die Erfindung betrifft eine Ventilvorrichtung mit den Merkmalen von Anspruch 1. Die Erfindung betrifft ferner ein Hydrauliksystem mit einer solchen Ventilvorrichtung.

Derartige Ventilvorrichtungen sind im Stand der Technik bekannt. Ein marktübliches Druckabschaltventil besteht aus einem vom Verbraucherdruck fremdgesteuerten Druckbegrenzungsventil und einem Rückschlagventil. Das Druckabschaltventil wird vorwiegend in Zwei-Kreis-Hydrauliksystemen verwendet, die einen Niederdruckkreislauf mit einer Niederdruckpumpe und einen Hochdruckkreislauf mit einer Hochdruckpumpe aufweisen. Die Volumenströme der Hydraulikkreise werden zum gleichen Verbraucher summiert. Der Niederdruckkreis übernimmt hierbei üblicherweise den Eilgang des Verbrauchers bei einem niedrigeren Druck und einem höheren Volumenstrom. Der Hochdruckkreislauf sorgt für die anschließende Kraftaufbringung, zum Beispiel beim Spannen, bei einem höheren Druck und einem niedrigeren Volumenstrom. Der Hochdruckkreislauf ist zusätzlich meistens über ein eigenes Druckbegrenzungsventil abgesichert.

Das Druckabschaltventil dient zum druckabhängigen Abschalten des Förderstroms des Niederdruckkreises. Sobald der am Druckbegrenzungsventil eingestellte Abschaltdruck am Verbraucher erreicht ist, wird das Druckbegrenzungsventil vollständig geöffnet. Auf diese Weise bricht der Fluiddruck stromauf des Rückschlagventiles zusammen, so dass das Rückschlagventil schließt und den Verbraucher von der Niederdruckpumpe trennt. Somit wird der Förderstrom der Niederdruckpumpe auf verlustarmen Umlauf zum Tank über das vollständig geöffnete Druckbegrenzungsventil geschaltet. In diesem Zustand fördert nur noch die Hochdruckpumpe in den Verbraucher. Sinkt der Verbraucherdruck wieder unter einen eingestellten Abschaltdruck, so wird der Niederdruck-Förderstrom wieder zum Verbraucher zugeschaltet.

Seitens der Anwender derartiger Druckabschalteventile besteht die stete Forderung, diese kompakter und kostengünstiger herzustellen sowie funktionssicher auszugestalten.

Neben den genannten, allgemeinen Druckabschaltventilen werden in der Hydraulik auch spezialisierte Ventilvorrichtungen verwendet, die zum kontrollierten Laden und gegebenenfalls Nachladen von speicherfähigen hydraulischen Systemen, insbesondere Hydraulikspeichern oder Akkumulatoren, vorgesehen sind. In solchen Anordnungen wird in der Regel nur ein Druckkreis bzw. eine Pumpe eingesetzt. Bei Erreichen eines gewünschten, vorgebbaren Drucks im Speicher schaltet ein Druckbegrenzungsventil den Pumpenvolumenstrom auf verlustarmen Umlauf, während über ein Rückschlagventil sichergestellt ist, dass der Druck im speicherfähigen hydraulischen System aufrechterhalten wird. Charakteristisch für derartige Ventilanordnungen, die auch als Speicherladeventile bezeichnet werden, ist dann das Verhalten bei sinkendem Druck im speicherfähigen hydraulischen System. Wenn nämlich der Speicherdruck infolge einer Temperaturänderung, einer Leckage oder durch bestimmungsgemäßen Verbrauch absinkt, ist durch die Ventilvorrichtung sichergestellt, dass das Druckbegrenzungsventil nicht sofort wieder schließt und damit den Nachladevorgang einleitet, sondern dass das Schließen des Druckbegrenzungsventils erst bei Unterschreiten eines vorgebbaren Grenzdruckes erfolgt. Durch diese Maßnahme wird erreicht, dass das speicherfähige hydraulische System seltener nachgeladen wird. Die bekannten Speicherladeventile benötigen jedoch sehr viel Bauraum.

Der Prospekt "Abschaltventile ASE und ASG", Ausgabe 3/2007, der Firma HydroWer-Hydraulik GmbH, Am Leveloh 15b, 45549 Sprockhövel, Deutschland, beschreibt eine Ventilvorrichtung mit mindestens einem Tankdruck-Anschluss; einem ersten Druckanschluss; einem zweiten Druckanschluss; und einem Druckabschaltventil, das zwischen die einzelnen Anschlüsse geschaltet ist und das mindestens zwei Ventilkomponenten aufweist, wobei mit der ersten Ventilkomponente der erste Druckanschluss mit dem Tankdruck-Anschluss bei Erreichen eines vorgebbaren Druckabschaltwertes verbindbar ist und mit der zweiten Ventilkomponente der zweite Druckanschluss vom ersten Druckanschluss bei einem höheren Fluiddruck am zweiten Druckanschluss als am ersten Druckanschluss trennbar ist, wobei beide Ventilkomponenten zu einer handelbaren Baueinheit zusammengefasst sind und wobei beide Ventilkomponenten hierfür in ein gemeinsames Ventilgehäuse integriert sind, wobei die erste Ventilkomponente ein Druckbegrenzungsventil ist, wobei die zweite Ventilkomponente ein Rückschlagventil ist, das sich in Richtung des zweiten Druckanschlusses öffnet, und wobei ein Rückschlagventilkolben des Rückschlagventils von einem Rückschlag-ventil-Energiespeicher angesteuert ist und in seiner Schließstellung an einem Rückschlagventilsitz gehalten ist.

Eine weitere Ventilvorrichtung geht aus der DE 196 33 539 A1 hervor.

Vor diesem Hintergrund stellt sich die Erfindung die Aufgabe, eine Ventilvorrichtung und ein Hydrauliksystem mit einer solchen Ventilvorrichtung aufzuzeigen, die kleiner bauen und einen geringeren Anschaffungspreis haben sowie funktionssicher im Betrieb sind.

Diese Aufgabe wird durch eine Ventilvorrichtung mit den Merkmalen von Anspruch 1 gelöst. Vorteilhafte Ausführungsformen der Ventilvorrichtung gehen aus den Unteransprüchen 2 bis 13 hervor. Die Aufgabe wird ferner durch ein Hydrauliksystem mit den Merkmalen von Anspruch 14 gelöst.

Erfindungsgemäß ist vorgesehen, dass der Rückschlagventilkolben als Hohlkolben ausgeführt und durch einen Aufsteuerkolben des Druckbegrenzungsventils geführt ist. Es ist ferner vorgesehen, dass beide Ventilkomponenten zu einer handelbaren Baueinheit zusammengefasst sind und dass beide Ventilkomponenten hierfür, vorzugsweise sich direkt kontaktierend, in ein gemeinsames Ventilgehäuse integriert sind. Auf diese Weise ist der erforderliche Bauraum für das Ventil auf ein Minimum reduziert. Es gibt nur noch eine Einheit, die verbaut werden muss, anstelle der herkömmlichen zwei oder drei Ventile. Es müssen weniger fluidführende Leitungen vorgesehen werden und es gibt weniger Anschlussstellen, an denen Leckagen auftreten können, was auch die Funktionssicherheit im Betrieb erhöht.

Das erfindungsgemäße Druckabschaltventil lässt sich, als Baukasten bestehend aus einzelnen modulartigen Komponenten konzipiert, im Rahmen einer Serienfertigung besonders kostengünstig herstellen. Es müssen nicht mehr drei einzelne Ventile hergestellt, bevorratet und ausgeliefert sowie gegebenenfalls gewartet werden. Für einen Anwender der neuen Ventilvorrichtungslösung ergibt sich dadurch eine erhebliche Vereinfachung. Der Konstrukteur der erfindungsgemäßen Ventilvorrichtungen muss nicht mehr mehrere einzelne Ventile dimensionieren, sondern kann direkt die Baueinheit als Ganzes den Gegebenheiten vor Ort anpassen. Bei einem Ausfall des Systems kann die Baueinheit insgesamt effizient getauscht werden. Es muss nicht mehr geprüft werden, an welchem Ventil eine Fehlfunktion aufgetreten ist.

Sofern davon die Rede ist, dass beide Ventilkomponenten in einem gemeinsamen Ventilgehäuse als handelbare Baueinheit integriert sind, kann das Ventilgehäuse ein einstückig ausgebildetes Gehäuseteil aufweisen, das vorzugsweise in der Art einer Einschraubpatrone, die man fachsprachlich auch als Cartridge-Ventillösung bezeichnet, ausgebildet ist und das zumindest an einem stirnseitigen Ende, vorzugsweise an beiden gegenüberliegenden stirnseitigen Enden, von einem separaten Gehäusedeckel abgeschlossen ist. Es besteht aber auch die Möglichkeit, in anderer Weise das Ventilgehäuse aus einzelnen Gehäuseteilen zusammenzusetzen; letztendlich kommt es darauf an, dass das Ventilgehäuse mit seinen einzelnen Anschlüssen am Ort des Einbaus in ein hydraulisches Gesamtsystem die handelbare Baueinheit als Ganzes in einer gemeinsamen Umhüllenden oder Umfassenden des Ventilgehäuses darstellt.

Die erste Ventilkomponente ist ein Druckbegrenzungsventil und die zweite Ventilkomponente ist ein Rückschlagventil, das sich in Richtung des zweiten Druckanschlusses öffnet.

Ein innerhalb des Ventilgehäuses längsverfahrbar geführter Druckbegrenzungsventilkolben des Druckbegrenzungsventils ist auf seiner einen Seite von einem Druckbegrenzungsventil-Energiespeicher, vorzugsweise in Form einer Druckfeder, und auf seiner anderen Seite vom Fluiddruck am zweiten Druckanschluss über den den Druckbegrenzungsventilkolben zumindest kontaktierenden Aufsteuerkolben ansteuerbar. Auf diese Weise ist die Druckabschaltung in Abhängigkeit vom Fluiddruck am zweiten Druckanschluss gewährleistet. Der Druckabschaltwert ist durch den Druckbegrenzungsventil-Energiespeicher, insbesondere dessen Federsteifigkeit und Vorspannung, vorgegeben. Dies ermöglicht es, den am ersten Druckanschluss anstehenden Fluiddruck zum Tankdruck-Anschluss abzuleiten, wenn der Fluiddruck am zweiten Druckanschluss ausreichend hoch ist, insbesondere höher als der vorgebbare Druckabschaltwert ist.

Weiter bevorzugt ist der Druckbegrenzungsventilkolben zumindest teilweise in einem Steuerraum innerhalb des Ventilgehäuses geführt, durch den der erste Druckanschluss mit dem Tankdruck-Anschluss über einen Ventilspalt verbindbar ist, und der Druckbegrenzungsventilkolben ist in Richtung des Druckbegrenzungsventil-Energiespeichers zur Ansteuerung einer Durchflussmenge an dem Ventilspalt mit einer Durchmesservergrößerung, vorzugsweise in Form eines Ventilkonus, versehen. Die Form des Druckbegrenzungsventilkolbens ist somit im Sinne einer Strömungsoptimierung ideal ausgebildet.

Besonders vorteilhaft ist für eine Druckkompensation des Druckbegrenzungsventilkolbens eine Fluidverbindung zwischen seiner dem Aufsteuerkolben zugewandten Kolbenseite und seiner dem Druckbegrenzungsventil-Energiespeicher zugewandten Kolbenseite vorgesehen. Durch die Drucckompensation wird der zum Bewegen des Druckbegrenzungsventilkolbens erforderliche Kraftaufwand erheblich reduziert, so dass die Bauteile größer und die Feder schwächer ausgeführt werden können. Durch die große Öffnungsfläche am Ventilsitz des Druckbegrenzungsventils wird das verlustarme Abströmen des Förderstroms am ersten Druckanschluss zum Tankdruck-Anschluss begünstigt, ohne dass deswegen das Rückschlagventil, welches in einer engeren Zone des Ventilgehäuses angeordnet ist, größer gebaut werden müsste. Das begrenzte Bauvolumen im Ventilgehäuse wird somit optimal genutzt.

Weiter bevorzugt kann zwischen dem Druckbegrenzungsventil-Energiespeicher und dem Druckbegrenzungsventilkolben ein kolbenartiges Ansteuerteil angeordnet sein. Das kolbenartige Ansteuerteil erleichtert es, die Ventilvorrichtung zusammenzubauen. Ferner ermöglicht es einen Ausgleich eines Winkelversatzes zwischen dem Druckbegrenzungsventilkolben und dem Druckbegrenzungsventil-Energiespeicher aufgrund von Fertigungstoleranzen.

Vorteilhaft ist der Rückschlagventil-Energiespeicher in Form einer Feder ausgebildet.

Besonders vorteilhaft ist der Rückschlagventilkolben gegenüber dem Aufsteuerkolben durch eine Dichtungsanordnung abgedichtet ist, die bevorzugt aus einem äußeren Dichtring aus einem reibungsarmen Gleitwerkstoff und einem inneren, O-ringartigen Vorspannelement zusammengesetzt ist, wobei weiter bevorzugt die Dichtungsanordnung im Rückschlagventilkolben oder im Aufsteuerkolben angeordnet ist. Diese Bauform ist besonders kompakt und aufgrund der rotationssymmetrischen Ausführung einfach herzustellen. Darüber hinaus erleichtert sie den Zusammenbau der Ventilvorrichtung.

Gemäß einer weiteren vorteilhaften Ausführungsform ist ein zweites Druckbegrenzungsventil zur Begrenzung des Druckes am zweiten Druckanschluss vorgesehen, das vorzugsweise im Ventilgehäuse, und weiter bevorzugt im kolbenartigen Ansteuerteil, angeordnet ist. Das zweite Druckbegrenzungsventil ermöglicht eine Absicherung des zweiten Druckanschlusses gegen einen schädlichen Überdruck. Durch die in das Ventilgehäuse integrierte Bauweise können ein externes Druckbegrenzungsventil und die dafür erforderlichen Anschlussleitungen eingespart werden. Die Gefahr von Leckagen wird somit deutlich reduziert.

Bevorzugt weist das zweite Druckbegrenzungsventil einen eigenen, zweiten Druckbegrenzungsventilkolben auf, der auf einer Seite vom Fluiddruck am zweiten Druckanschluss und auf einer gegenüberliegenden Seite von dem Druckbegrenzungsventil-Energiespeicher des ersten Druckbegrenzungsventils oder einem eigenen, zweiten Druckbegrenzungsventil-Energiespeicher, vorzugsweise in Form einer Feder, angesteuert ist. Weiterhin kann der zweite Druckbegrenzungsventil-Energiespeicher unter einer Vorspannung stehen, die vorteilhaft einstellbar ist. Bei Nutzung des ersten Druckbegrenzungsventil-Energiespeichers zum Schließen des zweiten Druckbegrenzungsventilkolbens steht der Öffnungsdruckwert des zweiten Druckbegrenzungsventils in einem festen Verhältnis zu dem am ersten Druckbegrenzungsventil-Energiespeicher eingestellten Druckabschaltwert. Bei Nutzung eines separaten zweiten Druckbegrenzungsventil-Energiespeichers mit einstellbarer Vorspannung kann der Öffnungsdruck des zweiten Druckbegrenzungsventils unabhängig vom gesetzten Druckabschaltwert eingestellt werden.

Mit Vorteil weist der Druckbegrenzungsventilkolben oder der Aufsteuerkolben eine Druckfläche auf, an welcher der Fluiddruck am ersten Druckanschluss derart ansteht, dass er dem Fluiddruck am zweiten Druckanschluss entgegen wirkt. Mithin wird der Druckbegrenzungsventilkolben oder der Aufsteuerkolben auf einer Steuerseite vom Fluiddruck am ersten Druckanschluss und auf einer gegenüberliegenden zweiten Steuerseite vom Fluiddruck am zweiten Druckanschluss beaufschlagt. Hierdurch kann die Ventilvorrichtung zur gesteuerten Ladung eines speicherfähigen hydraulischen Systems eingesetzt werden, das anstelle eines Verbrauchers an den zweiten Druckanschluss der Ventilvorrichtung angeschlossen ist. Durch die Druckfläche wird der Druckbegrenzungsventil-Energiespeicher durch den am ersten Druckanschluss anliegenden Fluiddruck unterstützt. Das Druckbegrenzungsventil öffnet, wenn die am Aufsteuerkolben oder am Druckbegrenzungsventilkolben angreifende Kraft des Fluiddrucks am zweiten Druckanschluss die Summe der Kräfte des Druckbegrenzungsventil-Energiespeichers, des Fluiddrucks am ersten Druckanschluss und des Tankdrucks übersteigt. Derweil ist durch das Rückschlagventil sichergestellt, dass der Druck im speicherfähigen hydraulischen System aufrechterhalten wird, während der Pumpenvolumenstrom auf verlustarmen Umlauf zum Tank gestellt ist. Dadurch, dass die Kraft des Fluiddrucks am ersten Druckanschluss die Kraft des Fluiddrucks am zweiten Druckanschluss vorteilhaft vermindert, kann das speicherfähige hydraulische System bis auf einen geringeren Speichergrenzdruck entladen werden. Erst bei Unterschreitung dieses Speichergrenzdrucks wird vorteilhaft das Druckbegrenzungsventil geschlossen und ein Nachladevorgang eingeleitet.

Besonders vorteilhaft ist an den zweiten Druckanschluss als Nutzanschluss mindestens ein hydraulischer Verbraucher anschließbar. Auf diese Weise kann der Fluidstrom vorteilhaft zum Antrieb eines Hydromotors und/oder eines Hydraulikzylinders verwendet werden. Das Druckabschaltventil wird vorteilhaft über den Lastdruck des oder der Verbraucher gesteuert. In einem Eilgang ist der Lastdruck geringer als der Druckabschaltwert, so dass sich die erste Ventilkomponente, das erste Druckbegrenzungsventil, in der Schließstellung befindet und der Förderstrom am ersten Druckanschluss, insbesondere von einer Niederdruckpumpe kommend, über die zweite Ventilkomponente, das Rückschlagventil, in den Verbraucher gefördert wird. Steigt der Lastdruck am Verbraucher an, zum Beispiel weil der Verbraucher eine Endlage fast erreicht hat und ein hoher Druck zum Spannen benötigt wird, so öffnet sich die erste Ventilkomponente und ermöglicht ein Abströmen des am ersten Druckanschluss anstehenden Fluids in Richtung des Tankdruck-Anschlusses. Dadurch bricht der Fluiddruck am ersten Druckanschluss ein und die zweite Ventilkomponente geht in die Schließstellung über, so dass sichergestellt ist, das Fluid vom zweiten Druckanschluss nicht zurück zum ersten Druckanschluss fließen kann. Sollte der Lastdruck am hydraulischen Verbraucher weiter steigen, so sichert das zweite Druckbegrenzungsventil die Ventilvorrichtung und den gesamten Hydraulikkreislauf gegen eine schädliche Überlast ab.

Alle Kolben und kolbenartigen Teile sind eigenständige Bauteile oder es sind zumindest der Aufsteuerkolben und der erste Druckbegrenzungsventilkolben als einstückiges Bauteil ausgeführt. Durch die Zusammenfassung einzelner Bauteile in größere Gesamtbauteile kann die Teilevielfalt beim Zusammenbau reduziert werden. Weiterhin sind die Gesamtbauteile oftmals kostengünstiger als mehrere einzelne Bauteile herstellbar. Dies ist insbesondere dann der Fall, wenn es sich um Teile handelt, die durch Drehen herstellbar sind.

Das Ventilgehäuse ist vorzugsweise in Patronenbauweise ausgeführt. Diese Bauweise ist besonders kostengünstig und kompakt.

Weiterhin kann vorteilhaft im Ventilgehäuse ein Anschlag vorgesehen sein, der der Begrenzung der axialen Verlagerung des ersten Druckbegrenzungsventilkolbens und/oder des Aufsteuerkolbens dient. Der Anschlag kann mit dem ersten Druckbegrenzungsventilkolben, dem Aufsteuerkolben oder mit dem kolbenartigen Ansteuerteil zusammenwirken. Durch die Begrenzung der Verlagerung wird verhindert, dass der Aufsteuerkolben und/oder der erste Druckbegrenzungskolben aus ihrer Führung gedrückt werden können. Weiterhin wird eine sichere Führung des Hohlkolbens des Rückschlagventils auf dem Aufsteuerkolben gewährleistet.

Das erfindungsgemäße Hydrauliksystem mit einer solchen Ventilvorrichtung zeichnet sich dadurch aus, dass der Tankdruck-Anschluss an einen Vorratstank; der erste Druckanschluss an eine Niederdruckpumpe; und der zweite Druckanschluss an eine Hochdruckpumpe und an mindestens einen hydraulischen Verbraucher angeschlossen sind.

Die Erfindung ist nachfolgend anhand von in den Figuren dargestellten Ausführungsbeispielen näher erläutert. Es zeigen:
- Fig. 1: eine schematische Darstellung des Aufbaus eines erfindungsgemäßen Hydrauliksystems;
- Fig. 2: eine erste Ausführungsform des erfindungsgemäßen Druckabschaltventils;
- Fig. 3: eine zweite Ausführungsform des Druckabschaltventils mit Drucckompensation;
- Fig. 4: eine dritte Ausführungsform des Druckabschaltventils mit einem zweiten Druckbegrenzungsventil als integralem Bestandteil;
- Fig. 5: eine vierte Ausführungsform des Druckabschaltventils als Speicherladeventil; und
- Fig. 6: eine fünfte Ausführungsform des Druckabschaltventils ebenfalls als Speicherladeventil.

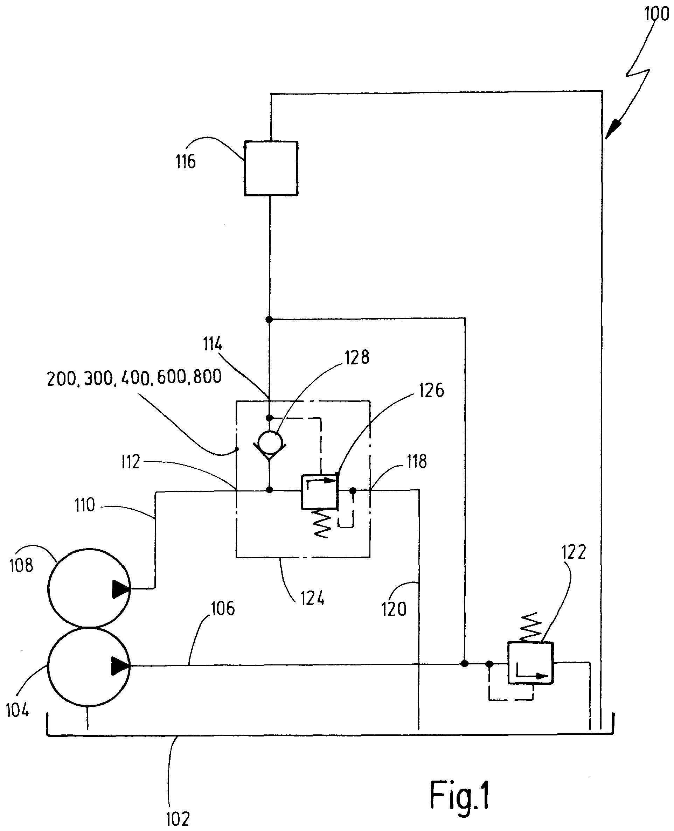

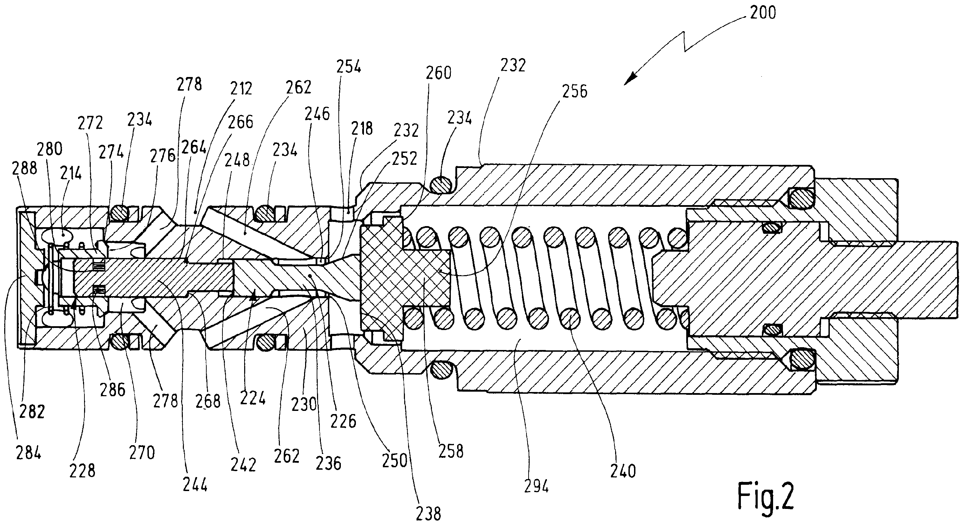

In Fig. 1 ist als Ganzes ein mit 100 bezeichnetes erfindungsgemäßes Hydrauliksystem gezeigt, wobei detailliertere Längsschnitte durch verschiedene Ausführungsformen einer darin eingebauten Ventilvorrichtung 200; 300; 400; 600; 800 aus den Fig. 2 bis 4 hervorgehen.

Im Hydrauliksystem 100 wird Fluid aus einem Tank 102 von einer Hochdruckpumpe 104 in einen Hochdruckkreislauf 106 und von einer Niederdruckpumpe 108 in einen Niederdruckkreislauf 110 gepumpt. Die Niederdruckpumpe 108 ist an einen ersten Druckanschluss 112; 212; 312; 412; 612; 812 der Ventilvorrichtung 200; 300; 400; 600; 800 angeschlossen. An einen zweiten Druckanschluss 114; 214; 314; 414; 614; 814 der Ventilvorrichtung 200; 300; 400; 600; 800 sind die Hochdruckpumpe 104 und zumindest ein Verbraucher 116 angeschlossen. Schließlich weist die Ventilvorrichtung 200; 300; 400; 600; 800 einen Tankdruck-Anschluss 118; 218; 318; 418; 618; 818 auf, an den eine zum Tank 102 führende Leitung 120 angeschlossen ist. Zur Absicherung des Hochdruckkreislaufs 106 ist ein zweites Druckbegrenzungsventil 122; 422 vorgesehen, das stromab der Hochdruckpumpe 104 und parallel zum Verbraucher 116 und zur Ventilvorrichtung 200; 300; 400; 600; 800 angeschlossen ist und eine Ableitung in Richtung des Tanks 102 bei einem schädlichen Überdruck ermöglicht. Die genannten Pumpen 104, 108 sind von einem Antrieb, beispielsweise in Form eines Elektromotors, der der Einfachheit halber nicht näher dargestellt ist, gemeinsam antreibbar.

Die in den Fig. 2 bis 4 näher gezeigten Ventilvorrichtungen 200; 300; 400; 600; 800 weisen zumindest einen Tankdruck-Anschluss 118; 218; 318; 418; 618; 818, einen ersten Druckanschluss 112; 212; 312; 412; 612; 812, einen zweiten Druckanschluss 114; 214; 314; 414; 614; 814 und ein Druckabschaltventil 124; 224; 324; 424; 624; 824 auf, das zwischen die einzelnen Anschlüsse 112, 114, 118; 212, 214, 218; 312, 314, 318; 412, 414, 418; 612, 614, 618; 812, 814, 818 geschaltet ist und das zwei Ventilkomponenten 126, 128; 226, 228; 326, 328; 426, 428; 626, 628; 826, 828 aufweist. Mit der ersten Ventilkomponente 126; 226; 326; 426; 626; 826, einem ersten Druckbegrenzungsventil, ist der erste Druckanschluss 112; 212; 312; 412; 612; 812 mit dem Tankdruck-Anschluss 118; 218; 318; 418; 618; 818 bei Erreichen eines vorgebbaren Druckabschaltwertes verbindbar. Mit der zweiten Ventilkomponente 128; 228; 328; 428; 628; 828, einem Rückschlagventil, das in Richtung des zweiten Druckanschlusses 114; 214; 314; 414; 614; 814 öffnet, ist der zweite Druckanschluss 114; 214; 314; 414; 614; 814 vom ersten Druckanschluss 112; 212; 312; 412; 612; 812 bei einem höheren Fluiddruck am zweiten Druckanschluss 114; 214; 314; 414; 614; 814 als am ersten Druckanschluss 112; 212; 312; 412; 612; 812 trennbar. Erfindungsgemäß bilden beide Ventilkomponenten 126, 128; 226, 228; 326, 328; 426, 428; 626, 628; 826, 828 eine handelbare Baueinheit. Hier sind die Ventilkomponenten 126, 128; 226, 228; 326, 328; 426, 428; 626, 628; 826, 828 sich direkt kontaktierend in ein gemeinsames Ventilgehäuse 230; 330; 430; 630; 830 integriert.

Wie man in den Längsschnitten sehen kann, sind die Ventilvorrichtungen 200; 300; 400; 600; 800 in einer besonders kompakten und kostengünstig herstellbaren Patronenbauweise ausgeführt, bei der an den Anschlüssen 212, 214, 218; 312, 314, 318; 412, 414, 418; 612, 614, 618; 812, 814, 818, Durchmessersprünge 232; 332; 432; 632; 832 und Dichtelemente 234; 334; 434; 634; 834 vorgesehen sind. Innerhalb des Ventilgehäuses 230; 330; 430; 630; 830 ist ein längsverfahrbar geführter erster Druckbegrenzungsventilkolben 236; 336; 436; 636; 836 des ersten Druckbegrenzungsventils 226; 326; 426; 626; 826 vorgesehen, der auf seiner einen Seite 238; 338; 438; 638; 838 von einem Druckbegrenzungsventil-Energiespeicher 240; 340; 440; 640; 840 in Form einer Druckfeder und auf seiner anderen Seite 242; 342; 442; 642; 842 vom Fluiddruck am zweiten Druckanschluss 214; 314; 414; 614; 814 über einen den Druckbegrenzungsventilkolben 236; 336; 436; 636; 836 zumindest kontaktierenden Aufsteuerkolben 244; 344; 444; 644; 844 ansteuerbar ist. Der erste Druckbegrenzungsventilkolben 236; 336; 436; 636; 836 ist in einem Steuerraum 246; 346; 446; 646; 846 innerhalb des Ventilgehäuses 230; 330; 430; 630; 830 in einer Gehäusebohrung 248; 348; 448; 648; 848 geführt, wobei durch den Steuerraum 246; 346; 446; 646; 846 der erste Druckanschluss 212; 312; 412; 612; 812 mit dem Tankdruck-Anschluss 218; 318; 418; 618; 818 über einen Ventilspalt 250; 350; 450; 650; 850 verbindbar ist. Der Druckbegrenzungsventilkolben 236; 336; 436; 636; 836 ist in Richtung des Druckbegrenzungsventil-Energiespeichers 240; 340; 440; 640; 840 zur Ansteuerung einer Durchflussmenge an dem Ventilspalt 250; 350; 450; 650; 850 mit einer Durchmesserverbreiterung 252; 352; 452; 652; 852 in Form eines Ventilkonus versehen. Der erste Druckbegrenzungsventilkolben 236; 336; 436; 636; 836 kann in seiner Schließstellung an einem Ventilsitz 254; 354; 454; 654; 854 des ersten Druckbegrenzungsventils 226; 326; 426; 626; 826 zur Anlage gebracht werden. Zwischen dem ersten Druckbegrenzungsventilkolben 236; 336; 436; 636; 836 und dem Druckbegrenzungsventil-Energiespeicher 240; 340; 440; 640; 840 ist ein kolbenartiges Ansteuerteil 256; 356; 456; 656; 856 vorgesehen, das einen axialen Vorsprung 258; 358; 658; 858 zur Führung des Druckbegrenzungsventil-Energiespeichers 240; 340; 440; 640; 840 und eine flanschähnliche Abstützfläche 260; 360; 460; 660; 860 für den Druckbegrenzungsventil-Energiespeicher 240; 340; 440; 640; 840 aufweist. Der Steuerraum 246; 346; 446; 646; 846 ist über mehrere Schrägbohrungen 262; 362; 462; 662; 862 mit dem ersten Druckanschluss 212; 312; 412; 612; 812 verbunden.

Der erste Druckbegrenzungsventilkolben 236; 336; 436; 636; 836 ist auf der dem Druckbegrenzungsventil-Energiespeicher 240; 340; 440; 640; 840 gegenüberliegenden Seite 242; 342; 442; 642; 842 von dem Aufsteuerkolben 244; 344; 444; 644; 844 angesteuert. Der Aufsteuerkolben 244; 344; 444; 644; 844 ist ebenfalls in einer Gehäusebohrung 264; 364; 448; 664; 864 geführt. Der Aufsteuerkolben 244; 344; 444; 644; 844 beaufschlagt den ersten Druckbegrenzungsventilkolben 236; 336; 436; 636; 836 mit dem am zweiten Druckanschluss 214; 314; 414; 614; 814 anstehenden Fluiddruck. Nur in der Ausführungsform der Fig. 2 ist der Aufsteuerkolben 244 mit einem Durchmessersprung 266 versehen, damit er an einem Anschlag 268 des Ventilgehäuses 230 zur Begrenzung der axialen Verlagerung des Aufsteuerkolbens 244 zur Anlage gebracht werden kann.

Der Aufsteuerkolben 244; 344; 444; 644; 844 ragt in einen zweiten Steuerraum 270; 370; 470; 670; 870 der endseitig im Ventilgehäuse 230; 330; 430; 630; 830 ausgebildet ist. In diesem Steuerraum 270; 370; 470; 670; 870 ist das Rückschlagventil 228; 328; 428; 628; 828 vorgesehen, das in Richtung des zweiten Druckanschlusses 214; 314; 414; 614; 814 öffnet. Das Rückschlagventil 228; 328; 428; 628; 828 weist einen als Hohlkolben ausgeführten Rückschlagventilkolben 272; 372; 472; 672; 872 auf, der an einem Ventilsitz 274; 374; 474; 674; 874 des Rückschlagventils 228; 328; 428; 628; 828 in der Schließstellung zur Anlage gebracht wird. Hierzu ist der Rückschlagventilkolben 272; 372; 472; 672; 872 auf einer Seite 276; 376; 476; 676; 876 vom Fluiddruck am ersten Druckanschluss 212; 312; 412; 612; 812, der über entsprechende Schrägbohrungen 278; 378; 478; 678; 878 in den zweiten Steuerraum 270; 370; 470; 670; 870 geleitet wird, und auf der gegenüberliegenden Seite 280; 380; 480; 680; 880 vom Fluiddruck am zweiten Druckanschluss 214; 314; 414; 614; 814 und einer Rückschlagventilfeder 282; 382; 482; 682; 882 beaufschlagt. Die Rückschlagventilfeder 282; 382; 482; 682; 882 stützt sich an einem deckelartigen Einsatz 284; 384; 484; 684; 884 des Ventilgehäuses 230; 330; 430; 630; 830 ab. Zwischen dem Aufsteuerkolben 244; 344; 444; 644; 844 und dem Rückschlagventilkolben 272; 372; 472; 672; 872 ist eine Dichtungsanordnung 286; 386; 486; 686; 886 vorgesehen. Die Dichtungsanordnung 286; 386; 486; 686; 886 ist in einer Umfangsnut 288; 388; 488; 688; 888 des Aufsteuerkolbens 244; 344; 444; 644; 844 angeordnet. Die Dichtungsanordnung 286; 386; 486; 686; 886 weist einen äußeren am Rückschlagventilkolben 272; 372; 472; 672; 872 entlang gleitenden Dichtring aus einem reibungsarmen Gleitwerkstoff und ein inneres, O-ringartiges Vorspannelement auf. Die Dichtungsanordnung 286; 386; 486; 686; 886 kann eine dynamische Dichtung oder eine metallische Spaltdichtung sein. Im letzten Fall muss mit einer geringen Leckage gerechnet werden.

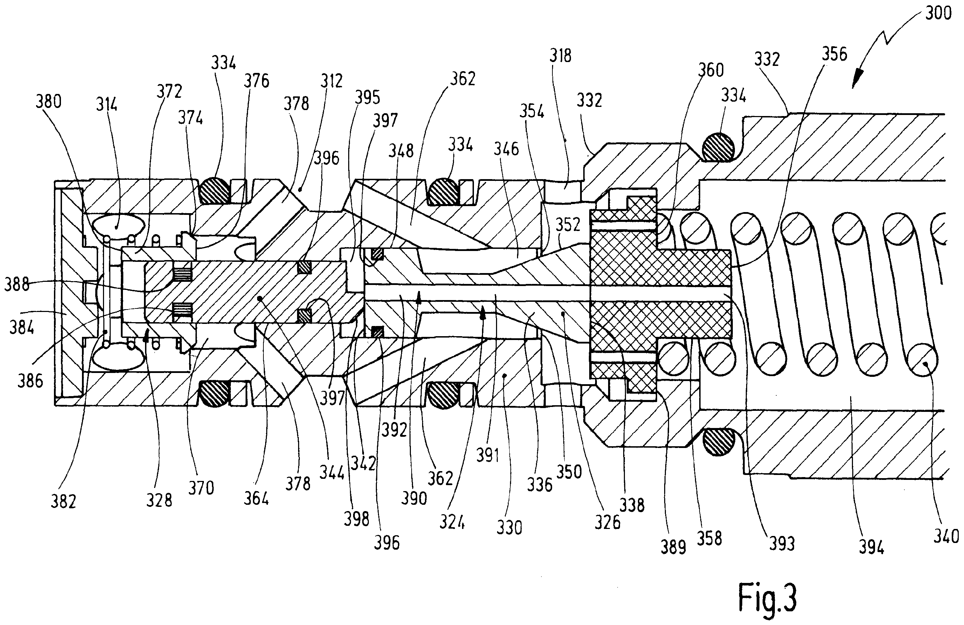

Die Ausführungsform 300 der Ventilvorrichtung der Fig. 3 unterscheidet sich von der Ausführungsform 200 der Fig. 2 lediglich dadurch, dass eine Druckkompensation 390 für den ersten Druckbegrenzungsventilkolben 336 und ein mit dem kolbenartigen Ansteuerteil 356 zusammenwirkender Anschlag 389 vorgesehen sind.

Für die Druckkompensation 390 des Druckbegrenzungsventilkolbens 336 ist eine Fluidverbindung 391 zwischen seiner dem Aufsteuerkolben 344 zugewandten Kolbenseite 342 und seiner dem Druckbegrenzungsventil-Energiespeicher 340 zugewandten Kolbenseite 338 vorgesehen. Diese Fluidverbindung 391 ist durch eine Axialbohrung 392 verwirklicht. Die Fluidverbindung 391 wird durch eine korrespondierende Axialbohrung 393 im Ansteuerteil 356 in den Federraum 394 des ersten Druckbegrenzungsventil-Energiespeichers 340 verlängert. Auf diese Weise kann der Tankdruck auf die in der Bildebene linke Stirnfläche 342 des ersten Druckbegrenzungsventilkolbens 336 rückgeführt werden. Zwischen dem ersten Druckbegrenzungsventilkolben 336 und dem Aufsteuerkolben 344 ist weiterhin eine Druckkammer 395 vorgesehen. Zur Bildung der Druckkammer 395 ist sowohl der erste Druckbegrenzungsventilkolben 336 als auch der Aufsteuerkolben 344 mit jeweils einem Dichtelement 396 gegenüber dem Ventilgehäuse 330 abgedichtet. Bei den Dichtelementen 396 handelt es sich ebenfalls um dynamische Dichtungen oder um metallische Spaltdichtungen. Die Dichtelemente 396 sind in Umfangsnuten 397 des ersten Druckbegrenzungsventilkolbens 336 und des Aufsteuerkolbens 344 angeordnet. Um den Aufsteuerkolben 344 vom ersten Druckbegrenzungsventilkolben 336 zu beabstanden, ist am Aufsteuerkolben 344 endseitig eine Nase 398 vorgesehen. Aufgrund der Druckkompensation 390 kann der Druckbegrenzungsventilkolben 336 größer ausgeführt werden. Durch die größere Öffnungsfläche am Ventilsitz 354 des ersten Druckbegrenzungsventils 326 wird das verlustarme Abströmen des am ersten Druckanschluss 312 anstehenden Förderstroms zum Tankdruck-Anschluss 318 begünstigt, ohne dass deswegen das Rückschlagventil 328, welches in dem engeren zweiten Steuerraum 370 des Ventilgehäuses 330 vorgesehen ist, größer gebaut werden müsste. Das begrenzte Bauvolumen der Ventilvorrichtung 300 in Patronenbauweise wird dadurch optimal ausgenutzt.

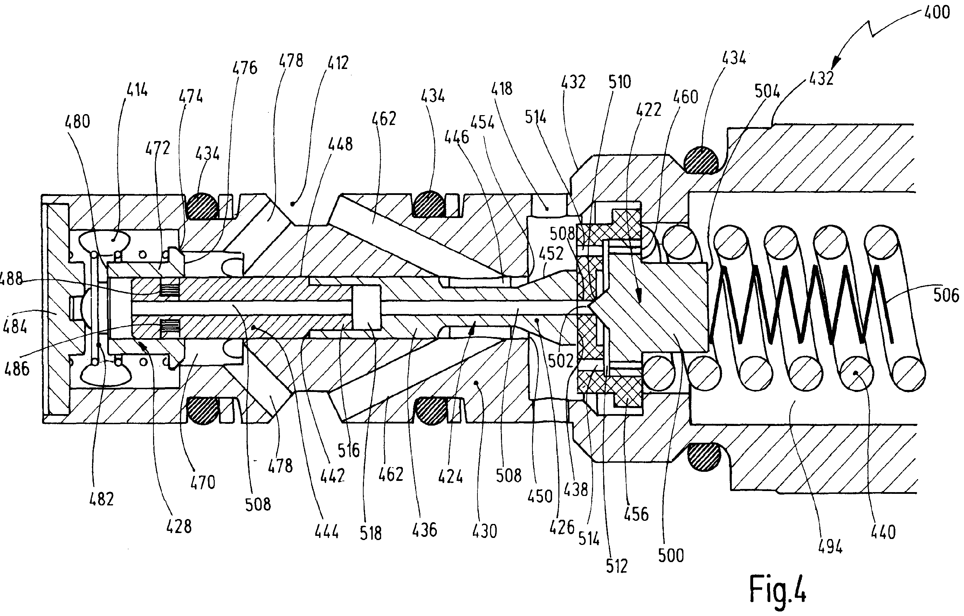

Die Ausführungsform 400 der Ventilvorrichtung gemäß Fig. 4 unterscheidet sich von der Ausführungsform 300 der Fig. 3 dadurch, dass anstelle der Druckkompensation 390 ein zweites Druckbegrenzungsventil 422 in das Ventilgehäuse 430 integriert ist. Das zweite Druckbegrenzungsventil 422 ist im kolbenartigen Ansteuerteil 456 angeordnet und zur Begrenzung des Drucks am zweiten Druckanschluss 414 vorgesehen. Das zweite Druckbegrenzungsventil 422 weist einen zweiten Druckbegrenzungsventilkolben 500 auf, der auf einer Seite 502 vom Fluiddruck am zweiten Druckanschluss 414 und auf einer gegenüberliegenden Seite 504 von einem zweiten Druckbegrenzungsventil-Energiespeicher 506 in Form einer weiteren Druckfeder angesteuert ist. Grundsätzlich ist es aber auch vorstellbar, dass der Druckbegrenzungsventil-Energiespeicher 440 sowohl den zweiten Druckbegrenzungsventilkolben 500 als auch das kolbenartige Ansteuerteil 456 ansteuert, so dass der zweite Druckbegrenzungsventil-Energiespeicher 506 entfallen kann. Hierzu sind axiale Bohrungen 508 im Aufsteuerkolben 444, im ersten Druckbegrenzungsventilkolben 436 und im kolbenartigen Ansteuerteil 456 vorgesehen. Auf der Rückseite des Ventilsitzes 510 des zweiten Druckbegrenzungsventils 422 ist eine Ventilkammer 512 vorgesehen, die mit dem Tankdruck-Anschluss 418 über mehrere Bohrungen 514 fluidleitend verbunden ist. Der zweite Druckbegrenzungsventilkolben 500 ist umfangsseitig im kolbenartigen Ansteuerteil 456 geführt. Der zweite Druckbegrenzungsventil-Energiespeicher 506 beaufschlagt eine Rückseite 504 des zweiten Druckbegrenzungsventilkolbens 500 mit einer vorzugsweise einstellbaren Vorspannung. Zur Führung des Aufsteuerkolbens 444 ist dieser mit einem im Außendurchmesser verringerten axialen Vorsprung 516 versehen, der in eine Ausnehmung 518 des ersten Druckbegrenzungsventilkolbens 436 eingreift.

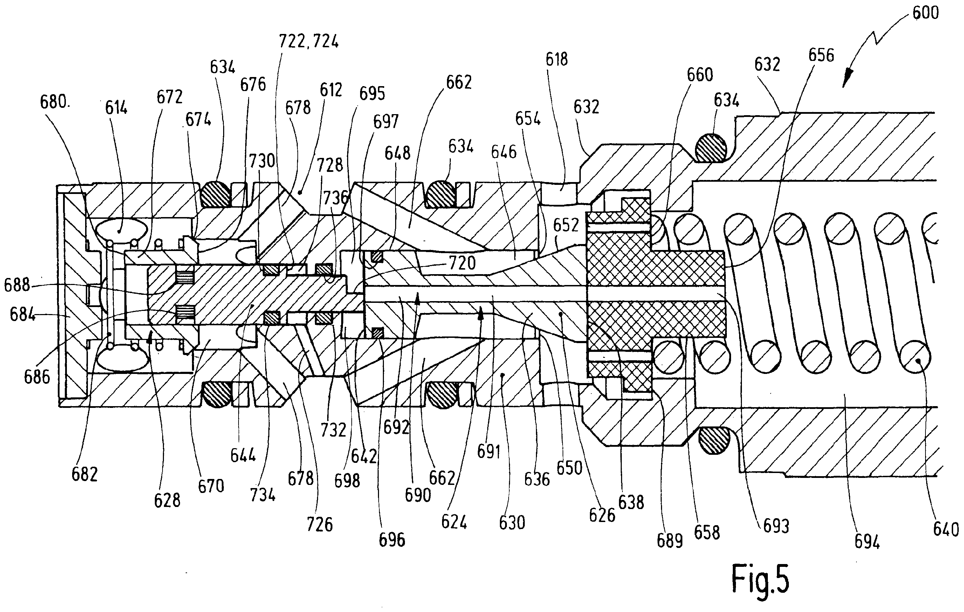

Die Ausführungsform der Ventilvorrichtung 600 gemäß Fig. 5 unterscheidet sich von der Ventilvorrichtung 300 der Fig. 3 lediglich dadurch, dass am Aufsteuerkolben 644 auf der dem zweiten Druckanschluss 614 abgewandten Seite 720 ein Absatz 722 vorgesehen ist, durch den eine Druckfläche 724 ausgebildet ist. An der Druckfläche 724 kann der Fluiddruck am ersten Druckanschluss 612 angreifen. Hierzu ist mindestens ein Verbindungskanal 726 in Form einer Schrägbohrung vorgesehen, der den ersten Druckanschluss 612 mit der Druckfläche 724 verbindet. Auf diese Weise wird eine Druckkammer 728 zwischen dem Aufsteuerkolben 644 und dem Ventilgehäuse 630 gebildet. Zur Abdichtung dieser Druckkammer 728 sind angrenzend in Umfangsnuten 730, 732 des Ventilgehäuses 630 und des Aufsteuerkolbens 644 Dichtelemente in Form von Ringdichtungen 734, 736 vorgesehen. Somit ist ein Speicherladeventil realisiert.

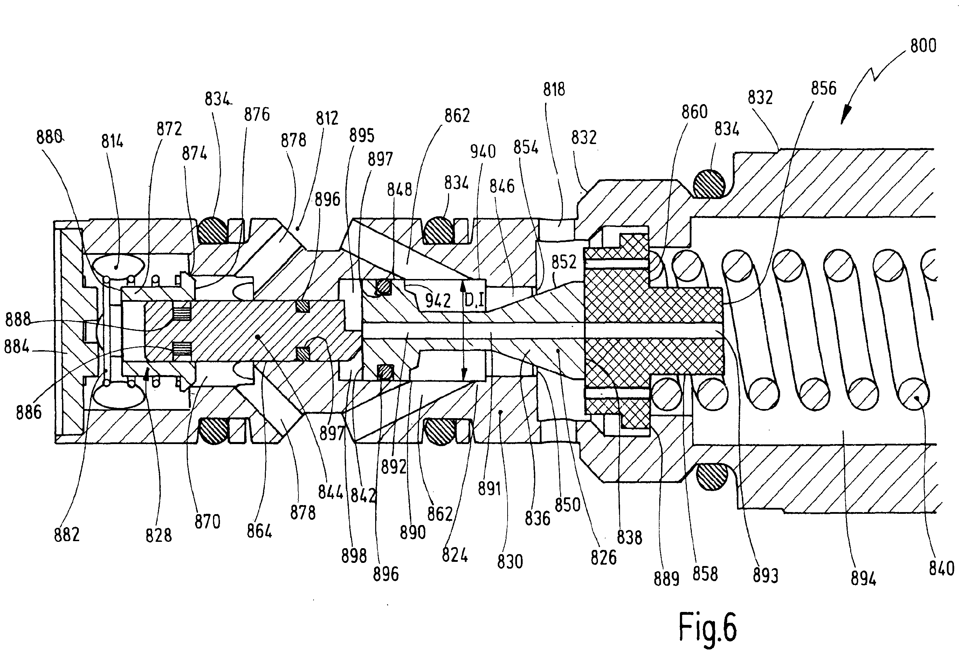

Die Ausführungsform der Ventilvorrichtung 800 gemäß Fig. 6 unterscheidet sich von der Ventilvorrichtung 300 der Fig. 3 lediglich dadurch, dass der Druckbegrenzungsventilkolben 836 auf der dem zweiten Druckanschluss 814 zugewandten Seite, das heißt am in der Bildebene linken Ende, im Durchmesser D vergrößert ist und in einem im Innendurchmesser I entsprechend vergrößerten Gehäuseabschnitt 940 geführt ist. Hierdurch ist eine vergrößerte Druckfläche 942 gebildet. An der Druckfläche 842 kann der Fluiddruck am ersten Druckanschluss 812 entgegen der Wirkung des Fluiddrucks am zweiten Druckanschluss 814 angreifen. Auf diese Weise ist eine zweite Ausführungsform der Ventilvorrichtung 800 in Form eines Speicherladeventils realisiert.

Alle Kolben 236, 244, 272; 336, 344, 372; 436, 444, 472, 500; 636, 644, 672; 836, 844, 872 und kolbenartigen Teile 256; 356; 456; 656; 856 sind in den Fig. 2 bis 4 eigenständige Bauteile. Es ist aber auch vorstellbar, dass der Aufsteuerkolben 244; 344; 444; 644; 844 und der erste Druckbegrenzungsventilkolben 236; 336; 436; 636; 836 ein einstückiges Bauteil sind.

Nachfolgend wird die Funktionsweise der Ventilvorrichtung 200; 300; 400; 600; 800 erläutert.

Das Druckabschaltventil 124; 224; 324; 424; 624; 824 wird vorteilhaft über den Lastdruck des zumindest einen Verbrauchers 116 gesteuert. In einem Eilgang ist der Lastdruck geringer als der Druckabschaltwert, so dass sich die erste Ventilkomponente 126; 226; 326; 426; 626; 826, das erste Druckbegrenzungsventil, in der Schließstellung befindet und der Förderstrom am ersten Druckanschluss 112; 212; 312; 412; 612; 812, insbesondere von einer Niederdruckpumpe 108 kommend, über die zweite Ventilkomponente 128; 228; 328; 428; 628; 828, das Rückschlagventil, in den Verbraucher 116 gefördert wird. Steigt der Lastdruck am Verbraucher 116 über einen über den ersten Druckbegrenzungsventil-Energiespeicher 240; 340; 440; 640; 840 eingestellten Druckabschaltwert an, zum Beispiel weil am Verbraucher 116 ein hoher Druck zum Spannen benötigt wird, so öffnet sich die erste Ventilkomponente 126; 226; 326; 426; 626; 826 und ermöglicht ein Abströmen des am ersten Druckanschluss 112; 212; 312; 412; 612; 812 anstehenden Fluids in Richtung des Tankdruck-Anschlusses 118; 218; 318; 418; 618; 818. Dadurch bricht der Fluiddruck am ersten Druckanschluss 112; 212; 312; 412; 612; 812 ein und die zweite Ventilkomponente 128; 228; 328; 428; 628; 828 geht in die Schließstellung über, so dass sichergestellt ist, dass kein Fluid vom zweiten Druckanschluss 114; 214; 314; 414; 614; 814 zurück zum ersten Druckanschluss 112; 212; 312; 412; 612; 812 fließen oder gar zum Tankdruck-Anschluss 118; 218; 318; 418; 618; 818 abfließen kann. Auf diese Weise wird der Förderstrom der Niederdruckpumpe 108 durch das Druckabschaltventil 124; 224; 324; 424; 624; 824 verlustarm bei einem hohen Lastdruck am Verbraucher 116 in Richtung des Tanks 102 abgeleitet.

Sollte der Lastdruck am hydraulischen Verbraucher 116 weiter steigen, so sichert das in Fig. 1 und 4 gezeigte zweite Druckbegrenzungsventil 122; 422 die Ventilvorrichtung 400 und den gesamten Hydraulikkreislauf 100 gegen eine schädliche Überlast ab. In der Ausführungsform der Fig. 4 ist das zweite Druckbegrenzungsventil 422 dabei vorteilhaft in das Ventilgehäuse 430 integriert, was den erforderlichen Bauraum reduziert und etwaige Leckageverluste vermeiden hilft.

In den Ausführungsformen der Fig. 5 und 6 sind Speicherladeventile 600; 800 gezeigt. Bei diesen ist am Aufsteuerkolben 644 oder am Druckbegrenzungsventilkolben 836 eine zusätzliche Druckfläche 724; 942 vorgesehen, an der der Fluiddruck am ersten Druckanschluss 612; 812 entgegen der Wirkung des Fluiddruckes am zweiten Druckanschluss 614; 814 angreifen kann. Durch diese Maßnahmen ist es möglich, ein an den zweiten Druckanschluss 614; 814 angeschlossenes speicherfähiges hydraulisches System stärker zu entladen und mithin das Nachladen hinauszuzögern.

Durch die Erfindung wird somit eine Ventilvorrichtung 200; 300; 400; 600; 800 aufgezeigt, die kompakter baut und kostengünstiger ist. Durch die Integration des Rückschlagventils 128; 228; 328; 428; 628; 828 und von bis zu zwei Druckbegrenzungsventilen 126; 226; 326; 422, 426; 626; 826 in einem Ventilgehäuse, das noch dazu in Patronenbauweise ausgeführt sein kann, wird eine extrem bauraumsparende Ausführungsform realisiert. Etwaige Leckageverluste können auf ein Minimum reduziert werden. Insgesamt erlaubt es die erfindungsgemäße Ventilvorrichtung 200; 300; 400; 600; 800 daher, eine Niederdruckquelle 108 von einem Verbraucher 116 in Abhängigkeit vom am Verbraucher 116 anstehenden Fluiddruck abzukoppeln und deren Förderstrom verlustarm in Richtung des Tanks 102 abzuleiten. Darüber hinaus kann die Hochdruckquelle 104 über das zweite integrierte Druckbegrenzungsventil 422 abgesichert werden.

## Patentansprüche

1. Ventilvorrichtung mit mindestens
- einem Tankdruck-Anschluss (118; 218; 318; 418; 618; 818);
- einem ersten Druckanschluss (112; 212; 312; 412; 612; 812);
- einem zweiten Druckanschluss (114; 214; 314; 414; 614; 814); und
- einem Druckabschaltventil (124; 224; 324; 424; 624; 824), das zwischen die einzelnen Anschlüsse geschaltet ist und das mindestens zwei Ventilkomponenten (126, 128; 226, 228; 326, 328; 426, 428; 626, 628; 826, 828) aufweist,
wobei mit der ersten Ventilkomponente (126; 226; 326; 426; 626; 826) der erste Druckanschluss (112; 212; 312; 412; 612; 812) mit dem Tankdruck-Anschluss (118; 218; 318; 418; 618; 818) bei Erreichen eines vorgebbaren Druckabschaltwertes verbindbar ist und mit der zweiten Ventilkomponente (128; 228; 328; 428; 628; 828) der zweite Druckanschluss (114; 214; 314; 414; 614; 814) vom ersten Druckanschluss (112; 212; 312; 412; 612; 812) bei einem höheren Fluiddruck am zweiten Druckanschluss (114; 214; 314; 414; 614; 814) als am ersten Druckanschluss (112; 212; 312; 412; 612; 812) trennbar ist,
wobei beide Ventilkomponenten (126, 128; 226, 228; 326, 328; 426, 428; 626, 628; 826, 828) zu einer handelbaren Baueinheit zusammengefasst sind und wobei beide Ventilkomponenten (126, 128; 226, 228; 326, 328; 426, 428; 626, 628; 826, 828) hierfür in ein gemeinsames Ventilgehäuse (230; 330; 430; 630; 830) integriert sind, wobei die erste Ventilkomponente (126; 226; 326; 426; 626; 826) ein Druckbegrenzungsventil ist,
wobei die zweite Ventilkomponente (128; 228; 328; 428; 628; 828) ein Rückschlagventil ist, das sich in Richtung des zweiten Druckanschlusses (114; 214; 314; 414; 614; 814) öffnet, und
wobei ein innerhalb des Ventilgehäuses (230; 330; 430; 630; 830) längsverfahrbar geführter Druckbegrenzungsventilkolben (236; 336; 436; 636; 836) des Druckbegrenzungsventils (226; 326; 426; 626; 826) auf seiner einen Seite (238; 338; 438; 638; 838) von einem Druckbegrenzungsventil-Energiespeicher (240; 340; 440; 640; 840) und auf seiner anderen Seite (242; 342; 442; 642; 842) vom Fluiddruck am zweiten Druckanschluss (214; 314; 414; 614; 814) über einen den Druckbegrenzungsventilkolben (236; 336; 436; 636; 836) zumindest kontaktierenden Aufsteuerkolben (244; 344; 444; 644; 844) ansteuerbar ist,
wobei ein Rückschlagventilkolben (272; 372; 472; 672; 872) des Rückschlagventils (228; 328; 428; 628; 828) von einem Rückschlagventil-Energiespeicher (282; 382; 482; 682; 882) angesteuert ist und in seiner Schließstellung an einem Rückschlagventilsitz (274; 374; 474; 674; 874) gehalten ist, wobei der Rückschlagventilkolben (272; 372; 472; 672; 872) als Hohlkolben ausgeführt und durch den Aufsteuerkolben (244; 344; 444; 644; 844) geführt ist.

2. Ventilvorrichtung nach Anspruch 1, **dadurch gekennzeichnet, dass** der Druck-begrenzungsventil-Energiespeicher (240; 340; 440; 640; 840) in Form einer Druckfeder ausgebildet ist.

3. Ventilvorrichtung nach Anspruch 2, **dadurch gekennzeichnet, dass** der Druckbegrenzungsventilkolben (236; 336; 436; 636; 836) zumindest teilweise in einem Steuerraum (246; 346; 446; 646; 846) innerhalb des Ventilgehäuses (230; 330; 430; 630; 830) geführt ist, durch den der erste Druckanschluss (212; 312; 412; 612; 812) mit dem Tankdruck-Anschluss (218; 318; 418; 618; 818) über einen Ventilspalt (250; 350; 450; 650; 850) verbindbar ist, und dass der Druckbegrenzungsventilkolben (236; 336; 436; 636; 836) in Richtung des Druckbegrenzungsventil-Energiespeichers (240; 340; 440; 640; 840) zur Ansteuerung einer Durchflussmenge an dem Ventilspalt (250; 350; 450; 650; 850) mit einer Durchmesservergrößerung (252; 352; 452; 652; 852), vorzugsweise in Form eines Ventilkonus, versehen ist.

4. Ventilvorrichtung nach Anspruch 2 oder 3, **dadurch gekennzeichnet, dass** für eine Druckkompensation (390) des Druckbegrenzungsventilkolbens (336) eine Fluidverbindung (391) zwischen seiner dem Aufsteuerkolben (344) zugewandten Kolbenseite (342) und seiner dem Druckbegrenzungsventil-Energiespeicher (340) zugewandten Kolbenseite (338) vorgesehen ist.

5. Ventilvorrichtung nach einem der Ansprüche 2 bis 4, **dadurch gekennzeichnet, dass** zwischen dem Druckbegrenzungsventil-Energiespeicher (240; 340; 440; 640; 840) und dem Druckbegrenzungsventilkolben (236; 336; 436; 636; 836) ein kolbenartiges Ansteuerteil (256; 356; 456; 656; 856) angeordnet ist.

6. Ventilvorrichtung nach einem der Ansprüche 1 bis 5, **dadurch gekennzeichnet**, der Rückschlagventil-Energiespeicher (282; 382; 482; 682; 882) in Form einer Druckfeder ausgebildet ist.

7. Ventilvorrichtung nach Anspruch 6, **dadurch gekennzeichnet, dass** der Rückschlagventilkolben (272; 372; 472; 672; 872) gegenüber dem Aufsteuerkolben (244; 344; 444; 644; 844) durch eine Dichtungsanordnung (286; 386; 486; 686; 886) abgedichtet ist, die bevorzugt aus einem äußeren Dichtring aus einem reibungsarmen Gleitwerkstoff und einem inneren, O-ringartigen Vorspannelement zusammengesetzt ist, wobei weiter bevorzugt die Dichtungsanordnung (286; 386; 486; 686; 886) im Rückschlagventilkolben (272; 372; 472; 672; 872) oder im Aufsteuerkolben (244; 344; 444; 644; 844) angeordnet ist.

8. Ventilvorrichtung nach einem der vorhergehenden Ansprüche, **dadurch gekennzeichnet, dass** ein zweites Druckbegrenzungsventil (122; 422) zur Begrenzung des Drucks am zweiten Druckanschluss (114; 414) vorgesehen ist, das vorzugsweise im Ventilgehäuse (430), und weiter bevorzugt im kolbenartigen Ansteuerteil (456), angeordnet ist.

9. Ventilvorrichtung nach Anspruch 8, **dadurch gekennzeichnet, dass** das zweite Druckbegrenzungsventil (422) einen zweiten Druckbegrenzungsventilkolben (500) aufweist, der auf einer Seite (502) vom Fluiddruck am zweiten Druckanschluss (418) und auf einer gegenüberliegenden Seite (504) von dem Druckbegrenzungsventil-Energiespeicher (440) des ersten Druckbegrenzungsventils (426) oder einem zweiten Druckbegrenzungsventil-Energiespeicher (506), vorzugweise in Form einer weiteren Druckfeder, angesteuert ist.

10. Ventilvorrichtung nach einem der vorhergehenden Ansprüche, **dadurch gekennzeichnet, dass** der Druckbegrenzungsventilkolben (836) oder der Aufsteuerkolben (644) eine Druckfläche (724; 942) aufweist, an welcher der Fluiddruck am ersten Druckanschluss (612; 812) derart ansteht, dass er dem Fluiddruck am zweiten Druckanschluss (614; 814) entgegen wirkt.

11. Ventilvorrichtung nach einem der vorhergehenden Ansprüche, **dadurch gekennzeichnet, dass** an den zweiten Druckanschluss (114; 214; 314; 414; 614; 814) als Nutzanschluss mindestens ein hydraulischer Verbraucher (116) anschließbar ist.

12. Ventilvorrichtung nach einem der vorhergehenden Ansprüche, **dadurch gekennzeichnet, dass** alle Kolben (236, 244, 272; 336, 344, 372; 436, 444, 472, 500; 636, 644, 672; 836, 844, 872) und kolbenartigen Teile (256; 356; 456; 656; 856) eigenständige Bauteile sind oder dass zumindest der Aufsteuerkolben (244; 344; 444; 644; 844) und der erste Druckbegrenzungsventilkolben (236; 336; 436; 636; 836) ein einstückiges Bauteil sind.

13. Ventilvorrichtung nach einem der vorhergehenden Ansprüche, **dadurch gekennzeichnet, dass** das Ventilgehäuse (230; 330; 430; 630; 830) in Patronenbauweise ausgeführt ist.

14. Hydrauliksystem mit einer Ventilvorrichtung nach einem der vorhergehenden Ansprüche, **dadurch gekennzeichnet, dass**
- der Tankdruck-Anschluss (118; 218; 318; 418; 618; 818) an einen Vorratstank (102);
- der erste Druckanschluss (112; 212; 312; 412; 612; 812) an eine Niederdruckpumpe (108); und
- der zweite Druckanschluss (114; 214; 314; 414; 614; 814) an eine Hochdruckpumpe (104) sowie an mindestens einen hydraulischen Verbraucher (116)
angeschlossen ist.

## Claims

1. Valve device having at least
- one tank pressure port (118; 218; 318; 418; 618; 818);
- a first pressure port (112; 212; 312; 412; 612; 812);
- a second pressure port (114; 214; 314; 414; 614; 814);
- a pressure shut-off valve (124; 224; 324; 424; 624; 824), which is switched between the individual ports and has at least two valve components (126, 128; 226, 228; 326, 328; 426, 428; 626, 628; 826, 828),
wherein the first pressure port (112; 212; 312; 412; 612; 812) can be connected to the tank pressure port (118; 218; 318; 418; 618; 818) by means of the first valve component (126; 226; 326; 426; 626; 826) upon reaching a pre-definable pressure cut-off value and the second pressure port (114; 214; 314; 414; 614; 814) can be separated from the first pressure port (112; 212; 312; 412; 612; 812) by means of the second valve component (128; 228; 328; 428; 628; 828) if the fluid pressure at the second pressure port (114; 214; 314; 414; 614; 814) is higher that at the first pressure port (112; 212; 312; 412; 612; 812),
wherein both valve components (126, 128; 226, 228; 326, 328; 426, 428; 626, 628; 826, 828) are combined to form a tradable structural unit and wherein both valve components (126, 128; 226, 228; 326, 328; 426, 428; 626, 628; 826, 828) are integrated in a common valve housing (230; 330; 430; 630; 830) for this purpose, wherein the first valve component (126; 226; 326; 426; 626; 826) is a pressure-limiting valve,
wherein the second valve component (128; 228; 328; 428; 628; 828) is a non-return valve that opens in the direction of the second pressure port (114; 214; 314; 414; 614; 814), and
wherein a pressure-limiting valve piston (236; 336; 436; 636; 836) of the pressure-limiting valve (226; 326; 426; 626; 826), said piston being mounted such as to be longitudinally movable in the valve housing (230; 330; 430; 630; 830), can be controlled on its one side (238; 338; 438; 638; 838) by a pressure-limiting valve energy accumulator (240; 340; 440; 640; 840) and on its other side (242; 342; 442; 642; 842) by the fluid pressure at the second pressure port (214; 314; 414; 614; 814) by means of a control piston (244; 344; 444; 644; 844) which at least comes into contact with the pressure-limiting valve piston (236; 336; 436; 636; 836), wherein a non-return valve piston (272; 372; 472; 672; 872) of the non-return valve (228; 328; 428; 628; 828) is controlled by a non-return valve energy accumulator (282; 382; 482; 682; 882) and held in its closing position on a non-return valve seat (274; 374; 474; 674; 874),
wherein the non-return valve piston (272; 372; 10 472; 672; 872) is designed as a hollow piston and guided by the control piston (244; 344; 444; 644; 844).

2. Valve device according to claim 1, **characterised in that** the pressure-limiting valve energy accumulator (240; 340; 440; 640; 840) is designed as a compression spring.

3. Valve device according to claim 2, **characterised in that** the pressure-limiting valve piston (236; 336; 436; 636; 836) is at least partially mounted in a control chamber (246; 346; 446; 646; 846) inside the valve housing (230; 330; 430; 630; 830), by means of which the first pressure port (212; 312; 412; 612; 812) can be connected to the tank pressure port (218; 318; 418; 618; 818) via a valve gap (250; 350; 450; 650; 850), and **in that** the pressure-limiting valve piston (236; 336; 436; 636; 836) is provided with a diameter extension (252; 352; 452; 652; 852), preferably in the form of a valve cone, in the direction of the pressure-limiting valve energy accumulator (240; 340; 440; 640; 840) to control a flow rate at the valve gap (250; 350; 450; 650; 850).

4. Valve device according to either claim 2 or claim 3, **characterised in that**, for the purpose of pressure compensation (390) for the pressure-limiting valve piston (336), a fluid connection (391) is provided between its piston side (342) facing the control piston (344) and its piston side (338) facing the pressure-limiting valve energy accumulator (340).

5. Valve device according to any one of claims 2 to 4, **characterised in that** a control part (256; 356; 456; 656; 856) in the form of a piston is arranged between the pressure-limiting valve energy accumulator (240; 340; 440; 640; 840) and the pressure-limiting valve piston (236; 336; 436; 636; 836).

6. Valve device according to any one of claims 1 to 5, **characterised in that** the non-return valve energy accumulator (282; 382; 482; 682; 882) is designed as a compression spring.

7. Valve device according to claim 6, **characterised in that** the non-return valve piston (272; 372; 472; 672; 872) is sealed in relation to the control piston (244; 344; 444; 644; 844) by means of a sealing arrangement (286; 386; 486; 686; 886), which preferably comprises an outer sealing ring made from a low-friction sliding material and an inner pre-tensioning element like an O-ring, wherein the sealing arrangement (286; 386; 486; 686; 886) is more preferably arranged in the non-return valve piston (272; 372; 472; 672; 872) or in the control piston (244; 344; 444; 644; 844).

8. Valve device according to any one of the preceding claims, **characterised in that** a second pressure-limiting valve (122; 422) is provided to limit the pressure at the second pressure port (114; 414), said valve preferably being arranged in the valve housing (430), and more preferably in the control part (456) in the form of a piston.

9. Valve device according to claim 8, **characterised in that** the second pressure-limiting valve (42) comprises a second pressure-limiting valve piston (500), which is controlled on one side (502) by the fluid pressure at the second pressure port (418) and on an opposite side (504) by the pressure-limiting valve energy accumulator (440) of the first pressure-limiting valve (46) or a second pressure-limiting valve energy accumulator (506), preferably in the form of another compression spring.

10. Valve device according to any one of the preceding claims, **characterised in that** the pressure-limiting valve piston (836) or the control piston (644) has a pressure surface (724; 942) to which the fluid pressure at the first pressure port (612; 812) is applied such that it counteracts the fluid pressure at the second pressure port (614; 814).

11. Valve device according to any one of the preceding claims, **characterised in that** at least one hydraulic consumer (116) can be connected to the second pressure port (114; 214; 314; 414; 614; 814) as a service connection.

12. Valve device according to any one of the preceding claims, **characterised in that** all pistons (236, 244, 272; 336, 344, 372; 436, 444, 472, 500; 636, 644, 672; 836, 844, 872) and piston-like parts (256; 356; 456; 656; 856) are independent components or **in that** at least the control piston (244; 344; 444; 644; 844) and the first pressure-limiting valve piston (236; 336; 436; 636; 836) form a one-piece component.

13. Valve device according to any one of the preceding claims, **characterised in that** the valve housing (230; 330; 430; 630; 830) is designed as a cartridge structure.

14. Hydraulic system with a valve device according to any one of the preceding claims, **characterised in that**
- the tank pressure port (118; 218; 318; 418; 618; 818) is connected to a supply tank (102);
- the first pressure port (112; 212; 312; 412; 612; 812) is connected to a low-pressure pump (108); and
- the second pressure port (114; 214; 314; 414; 614; 814) is connected to a highpressure pump (104) and to at least one hydraulic consumer (116).

## Revendications

1. Dispositif de soupape comprenant au moins
- un raccord (118 ; 218 ; 318 ; 418 ; 618 ; 818) de pression de réservoir ;
- un premier raccord (112 ; 212 ; 312 ; 412 ; 612 ; 812) de pression ;
- un deuxième raccord (114 ; 214 ; 314 ; 414 ; 614 ; 814) de pression ; et
- une soupape (124 ; 224 ; 324 ; 424 ; 624 ; 824) d'arrêt de la pression, qui est montée entre les divers raccords et qui a au moins deux éléments (126, 128 ; 226, 228 ; 326, 328 ; 426, 428 ; 626, 628 ; 826, 828) de soupape,
dans lequel, par le premier élément (126 ; 226 ; 326 ; 426 ; 626 ; 826) de soupape, le premier raccord (112 ; 212 ; 312 ; 412 ; 612 ; 812) de pression peut communiquer avec le raccord (118 ; 218 ; 318 ; 418 ; 618 ; 818) de pression de réservoir, lorsqu'une valeur d'interruption de la pression pouvant être donnée à l'avance est atteinte et par le deuxième élément (128 ; 228 ; 328 ; 428 ; 628 ; 828) de soupape, le deuxième raccord 114 ; 214 ; 314 ; 414 ; 614 ; 814) de pression peut être séparé du premier raccord (112 ; 212 ; 312 ; 412 ; 612 ; 812) de pression, si la pression du fluide au deuxième raccord (14 ; 214 ; 314 ; 414 ; 614 ; 814) de pression est plus haute qu'au premier raccord (112 ; 212 ; 312 ; 412 ; 612 ; 812) de pression,
dans lequel les deux éléments (126, 128 ; 226, 228 ; 326, 328 ; 426, 428 ; 626, 628 ; 826, 828) de soupape sont rassemblés en une unité de construction maniable et dans lequel les deux éléments (126, 128 ; 226, 228 ; 326, 328 ; 426, 428 ; 626,628 ; 826, 828) de soupape sont à cet effet intégrés dans un corps (230 ; 330 ; 430 ; 630 ; 830) commun de soupape,
le premier élément (126 ; 226 ; 326 ; 426 ; 626 ; 826) de soupape étant une soupape de limitation de la pression,
dans lequel le deuxième élément (128 ; 228 ; 328 ; 428 ; 628 ; 828) de soupape est un clapet antiretour qui s'ouvre dans le sens du deuxième raccord (114 ; 214 ; 314 ; 414 ; 614 ; 814) de pression, et dans lequel un piston (236 ; 336 ; 436 ; 636 ; 836) de la soupape de limitation de la pression, guidé avec possibilité de se déplacer longitudinalement dans le corps (230 ; 330 ; 430 ; 630 ; 830) de soupape, de la soupape (226 ; 326 ; 426 ; 626 ; 826) de limitation de la pression, peut, sur l'un de ses côtés (238 ; 338 ; 438 ; 638 ; 838), être commandé par un accumulateur (240, 340 ; 440 ; 640 ; 840) d'énergie de la soupape de limitation de la pression et de l'autre côté (242 ; 342 ; 442 ; 642 ; 842) par la pression du fluide au deuxième raccord (214 ; 314 ; 414 ; 614 ; 814) de pression par un piston (244 ; 344 ; 444 ; 644 ; 844) de commande au moins venant en contact avec le piston (236, 336 ; 436 ; 636 ; 836) de la soupape de limitation de la pression,
dans lequel un piston (272 ; 372 ; 472 ; 672 ; 872) du clapet antiretour (228 ; 328 ; 428 ; 628 ; 828) est commandé par un accumulateur (282 ; 382 ; 482 ; 682 ; 882) d'énergie du clapet antiretour et est maintenu dans sa position de fermeture sur un siège (274 ; 374 ; 474 ; 674 ; 874) du clapet antiretour, dans lequel le piston (272 ; 372 ; 472 ; 672 ; 872) de clapet antiretour est réalisé sous la forme d'un piston creux et est guidé dans le piston (244 ; 344 ; 444 ; 644 ; 844) de commande.

2. Dispositif de soupape suivant la revendication 1, **caractérisé en ce que** l'accumulateur (240, 340 ; 440 ; 640 ; 840) d'énergie de la soupape de limitation de la pression est constitué sous la forme d'un ressort de compression.

3. Dispositif de soupape suivant la revendication 2, **caractérisé en ce que** le piston (236 ; 336 ; 436 ; 636 ; 836) de la soupape de limitation de la pression est guidé, au moins en partie, dans un espace (246 ; 346 ; 446 ; 646 ; 846) de commande à l'intérieur du corps (230 ; 330 ; 430 ; 630 ; 830) de la soupape, par lequel le premier raccord (212 ; 312 ; 412 ; 612 ; 812) de pression peut communiquer avec le raccord (218 ; 318 ; 418 ; 618 ; 818) de pression par une fente (250 ; 350 ; 450 ; 650 ; 850) de la soupape et **en ce que** le piston (236 ; 336 ; 436 ; 636 ; 836) de la soupape de limitation de la pression est pourvu, dans le sens de l'accumulateur (240 ; 340 ; 440 ; 640 ; 840) d'énergie de la soupape de limitation de la pression, en vue de commander un débit à la fente (250 ; 350 ; 450 ; 650 ; 850) de la soupape, d'un agrandissement (252 ; 352 ; 452 ; 652 ; 852) de diamètre, de préférence sous la forme d'un cône de soupape.

4. Dispositif de soupape suivant la revendication 2 ou 3, **caractérisé en ce que**, pour une compensation (390) de pression du piston (336) de la soupape de limitation de la pression, il est prévu une liaison (391) fluidique entre son côté (343) de piston tourné vers le piston (344) de commande et son côté (338) de piston tourné vers l'accumulateur (340) d'énergie de la soupape de limitation de la pression.

5. Dispositif de soupape suivant l'une des revendications 2 à 4, **caractérisé en ce qu'**entre l'accumulateur (240 ; 340 ; 440 ; 640 ; 840) d'énergie de la soupape de limitation de la pression et le piston (236 ; 336 ; 436 ; 636 ; 836) de la soupape de limitation de la pression, est disposée une partie (256 ; 356 ; 456 ; 656 ; 856) de commande de type à piston.

6. Dispositif de soupape suivant l'une des revendications 1 à 5, **caractérisé en ce que** l'accumulateur (282 ; 382 ; 482 ; 682 ; 882) d'énergie du clapet antiretour est constitué sous la forme d'un ressort de compression.

7. Dispositif de soupape suivant la revendication 6, **caractérisé en ce que** le piston (272 ; 372 ; 472 ; 672 ; 872) du clapet antiretour est rendu étanche par rapport au piston (244 ; 344 ; 444 ; 644 ; 844) de commande par un agencement (286 ; 386 ; 486 ; 686 ; 886) d'étanchéité, qui est composé de préférence d'une bague extérieure d'étanchéité en un matériau glissant à peu de frottement et un élément intérieur de précontrainte de type à joint torique, dans lequel, en outre, de préférence l'agencement (286 ; 386 ; 486 ; 686 ; 886) d'étanchéité est disposé dans le piston (272 ; 372 ; 472 ; 672 ; 872) du clapet antiretour ou dans le piston (244 ; 344 ; 444 ; 644 ; 844) de commande.

8. Dispositif de soupape suivant l'une des revendications précédentes, **caractérisé en ce qu'**il est prévu une deuxième soupape (122 ; 422) de limitation de la pression pour limiter la pression au deuxième raccord (114 ; 414) de pression, laquelle est disposée de préférence dans le corps (430) de la soupape et, en outre, de préférence, dans la partie (456) de commande de type en piston.

9. Dispositif de soupape suivant la revendication 8, **caractérisé en ce que** la deuxième soupape (422) de limitation de la pression a un deuxième piston (500) de soupape de limitation de la pression qui, d'un côté (502), est commandé par la pression du fluide au deuxième raccord (418) de pression et, d'un côté (504) opposé, par l'accumulateur (440) d'énergie de la première soupape (426) de limitation de la pression ou par un deuxième accumulateur (506) d'énergie de soupape de limitation de la pression, de préférence sous la forme d'un autre ressort de compression.

10. Dispositif de soupape suivant l'une des revendications précédentes, **caractérisé en ce que** le piston (836) de la soupape de limitation de la pression ou le piston (644) de commande a une surface (724 ; 942) de pression où règne la pression du fluide au premier raccord (612 ; 812) de pression, de manière à s'opposer à la pression du fluide au deuxième raccord (614 ; 814) de pression.

11. Dispositif de soupape suivant l'une des revendications précédentes, **caractérisé en ce qu'**au deuxième raccord (114 ; 214 ; 314 ; 414 ; 614 ; 814) de pression peut être raccordé comme raccord utile au moins un consommateur (116) hydraulique.

12. Dispositif de soupape suivant l'une des revendications précédentes, **caractérisé en ce que** tous les pistons (236, 244, 272 ; 336, 344, 372 ; 436, 444, 472, 500 ; 636n 644, 672 ; 836, 844, 872) et les parties (256 ; 356 ; 456 ; 656 ; 856) de type à piston sont des pièces indépendantes ou **en ce qu'**au moins le piston (244 ; 344 ; 444 ; 644 ; 844) de commande et le premier piston (236 ; 336 ; 436 ; 636 ; 836) de la soupape de limitation de la pression sont une pièce d'un seul tenant.

13. Dispositif de soupape suivant l'une des revendications précédentes, **caractérisé en ce que** le corps (230 ; 330 ; 430 ; 630 ; 830) de la soupape est réalisé en mode de construction en cartouche.

14. Système hydraulique ayant un dispositif de soupape suivant l'une des revendications précédentes, **caractérisé en ce que**
- le raccord (118 ; 218 ; 318 ; 418 ; 618 ; 818) de pression de réservoir est raccordé à un réservoir (102) ;
- le premier raccord (112 ; 212 ; 312 ; 412 ; 612 ; 812) de pression est raccordé à une pompe (108) de basse pression ; et
- le deuxième raccord (114 ; 214 ; 314 ; 414 ; 614 ; 814) de pression est raccordé à une pompe (104) de haute pression, ainsi qu'à au moins un consommateur (116) hydraulique.
